# EUROPEAN PATENT APPLICATION

(11) **EP 4 404 119 A1**
(43) Date of publication of application: **24.07.2024**
(21) Application number: 23152574.2
(22) Date of filing: 20.01.2023
(51) Int. Cl.: G06Q 10/0833

(54) **METHOD AND SYSTEM FOR TREATING ENVIRONMENTAL AIR**

(71) Applicant: MANN+HUMMEL Ventures Pte. Ltd., Singapore 139234 (SG)
(72) Inventor: THEBAULT, Eric, 71640 Ludwigsburg (DE); JUNGINGER, Bernd, 70565 Stuttgart (DE); DOS SANTOS ASCENSAO, Macario Francisco, 71696 Möglingen (DE)
(74) Representative: Mann + Hummel Intellectual Property

(57) **Abstract**

An aspect of the disclosure relates to a method of treating environment air including: determining that a route of a demand vehicle overlaps with a geofenced area; determining that there may be an air treatment demand requirement at a demand vehicle; calculating an air treatment demand, which may be an amount to offset net emissions of the demand vehicle, and treating environment air.

## Description

### Technical Field

An aspect of the disclosure relates to a method of treating environment air. Another aspect of the disclosure relates to a system for treating environment air.

### Background Art

Due to ongoing progressive urbanization, the problem exists that the ambient air can exceed limit values for particulate matter and/or gases such as ozone, NOx, CO many times over, especially in certain weather conditions (no rain, inversion, low wind speeds, no air exchange between altitudes), as a result of industrial waste gases, road traffic and private fireplaces.

The problem of traffic-related emissions has recently been exacerbated by calls for driving bans for certain groups of vehicles, especially diesel cars, in areas of particularly high air pollution due to their NOx and particular matter emissions. Ambient air filtration has been proposed in DE202006019335 U1 to reduce the net emission footprint of an internal combustion vehicle and requires that the internal combustion vehicle has an air filter which may have limited air treatment capacity.

Therefore, there persists the problem to provide for improved air cleaning systems and methods.

### Summary

An aspect of the disclosure relates to a method of treating environment air including determining that a route of a demand vehicle overlaps with a geofenced area. The geofenced area may be a physical area which is virtually fenced. The method may include determining that there is an air treatment demand requirement at a demand vehicle, for example, by determining that net emissions of the demand vehicle may be above a pre-determined limit for the geofenced area. The method may include calculating an air treatment demand, which may be an amount to offset net emissions of the demand vehicle, for example, at least partially offset or totally so that net emissions of the demand vehicle satisfy the pre-determined limit for the geofenced area. The method may include controlling an air treatment system to carry out air treatment within the geofenced area. The air treatment system may be an air filtration system, for example, for filtering particulate matter.

An aspect of the disclosure relates to a system configured to carry out the method in accordance with various embodiments.

### Brief Description of Drawings

The drawings show:
FIG. 1 shows a schematic map of an urban area 70 including roads and city blocks delimited by the roads;
FIG. 2 shows an exemplary flow chart of the method 100;
FIG. 3 shows a vehicle 1 including an air treatment system 10 for treating environment air 7;
FIG. 4 is used to illustrated how the method of treating environmental air may be run concomitantly on a demand and a supply side, and how a vehicle 1 may be configured to as supply vehicle or as a demand vehicle, depending on its role;
FIG. 5 shows an example wherein a rout RUT1 of a demand vehicle 2 crosses a geofenced area GEO1, indicated by the route segment SEG1;
FIG. 6 is used to illustrate another embodiment in which the air treatment system is not part of a vehicle and is immobile;
FIG. 7 which shows a time diagram in which the crossings of each of the vehicles in the geofenced area GEO1 is shown by way of arrows;
FIG. 8 shows a time diagram in which the crossings in the geofenced area GEO1 of both vehicles is shown by arrows;
FIG. 9 shows a variation of the embodiment illustrated in connection with FIG. 8;
FIG. 10 shows a fleet of vehicles in accordance with various embodiments, for illustration purposes;
FIG. 11 shows another fleet of vehicles in accordance with various embodiments, for illustration purposes;
FIG. 12 shows a demand vehicle 2 and an immobile air treatment system FC1; and
FIG. 13 shows a schematic of another embodiment of an air treatment system 10 for cleaning environmental air.

### Detailed Description

An aspect of the disclosure concerns air treatment system for treating environment air, the air treatment system configured to be installed and/or be part of a vehicle. An aspect of the disclosure concerns a vehicle including the air treatment system. The air treatment system may further include a control circuit to control the air treatment system. The air treatment system or the vehicle may further include a communication interface configured to wirelessly send and receive commands external to the vehicle and operably coupled to the control circuit. The control circuit may be configured to, via the communication interface, receive a request for treatment. The request for treatment may be from external to the vehicle. The control circuit may be configured to, determine if the air treatment system has an additional treatment capacity available. The control circuit may be configured to, via the communication interface, send an acknowledgement if additional treatment capacity is available. The control circuit may be further configured to control the air treatment system to increase treatment capacity. According to various embodiments, treatment includes filtration and treating includes filtering.

According to various embodiments, the control circuit may be further configured to determine if there is treatment demand when a local treatment requirement is unsatisfied by the treatment system. The control circuit may be further configured to if there is a treatment demand, via the communication interface, send a request for remote treatment capacity and receive an acknowledgment. The control circuit may be further configured to provide (e.g., record) data indicative of the additional treatment capacity utilized on a memory. In examples, the memory may be implemented as any electronic circuit capable of storing information, such as based on D-flip-flips, and/or flash memory. In examples, the memory may be, without limitation, a local memory, a remote memory, a cache, a general purpose register, a register of a communication interface, or a combination thereof. Said data may be, e.g., a sum of a local treatment capacity and a remote treatment capacity. In an example the memory may be a local memory in the vehicle, such as a memory of or connected to the control unit. In some embodiments, the control circuit may be further configured to receive the data indicative of the additional treatment capacity utilized, e.g., from a supply vehicle. Thus, the method may further include sending data indicative of the additional treatment capacity utilized. Further, the method may further include receiving the data indicative of the additional treatment utilized.

As used herein, and in accordance with various embodiments, determining that there is an air treatment demand requirement (or simply air treatment demand or just demand) may include determining whether there is an air treatment demand requirement and determining the result to be positive, i.e., indicative that there is an air treatment demand.

According to some embodiments, a control unit may determine that it (i.e., the treatment system it controls) is able to carry out the air treatment for the demand according to various parameters, for example, based on a filter efficiency, a level of filter loading, and an air quality data (e.g., including a particulate matter measurement for the location of the supply vehicle).

According to various embodiments, a total treatment may be recorded in memory, e.g., if the total capacity is utilized, the total treatment may be a sum of the local treatment capacity and one or more additional treatment capacities. As used herein and in accordance with various embodiments, additional treatment (e.g., as in additional treatment capacity) may mean remote treatment.

According to various embodiments, the acknowledgement may indicate that a requested additional treatment capacity is available and/or the acknowledgment may include a data indicative of the additional treatment capacity available.

According to various embodiments, to increase treatment capacity may mean to increase treatment capacity by the additional treatment capacity. If the additional treatment capacity is fully utilized, then a total treatment may be stored in memory as a sum of the local treatment capacity and the additional treatment capacitiy(ies). In some embodiments, the air treatment system and/or the method in accordance with various embodiments, may be configured so that on acknowledgement the additional treatment capacity is fully utilized.

According to various embodiments, to receive a request for treatment may include to receive data indicative of a require capacity also named herein as treatment demand, or simply demand. According to various embodiments, determine if the air treatment system has additional treatment capacity available may include determine whether the additional treatment capacity is greater or equal to the demand. For example, the capacity could be a capacity per pre-determined time slot, e.g., provided by a "heartbeat" clock used by the control circuit, which could also be known, pre-determined, and/or transmitted to a demand vehicle. Another timing could be used, e.g., a time frame for treatment could be determined during by a communication handshaking.

According to various embodiments, the acknowledgement may include data indicative of a cost rate of the additional treatment capacity.

According to various embodiments, the control circuit may be further configured to, before to control the air treatment system to increase treatment capacity, receive a request confirmation. Optionally, the request confirmation may include a microtransaction (such as a micropayment) or micropayment indication data. A micropayment may correlate, e.g., with energy expenditure for air treatment, and/or cost associated with pollution. According to various embodiments, treatment includes filtration and treating includes filtering.

An aspect of the disclosure concerns a fleet of two or more vehicles in accordance with various embodiments. The two or more vehicles may be configured to operably communicable with each other. The first vehicle (also referred to as a demand vehicle) may be configured to requesting a second vehicle (also referred to as a supply vehicle) to provide air treatment, and the second vehicle may be configured to receive the request and control an air treatment system of the second vehicle to increase treatment capacity. According to various embodiments, treatment includes filtration and treating includes filtering. In some embodiments, the demand vehicle and the supply vehicle may communicate one or more movement data, e.g., routing or velocity vectors, which may serve for determining a distance or an overlap of the second vehicle within a desired region of the first vehicle, such as a radius of a circle centered on the first vehicle, or a region in which the first vehicle has passed or will pass within a pre-determine time. This may be in addition to determining that a route of a demand vehicle overlaps with a geofenced area. For example, movement data of the demand vehicle may be transmitted to the supply vehicle for determination of distance at the supply vehicle, movement data of the supply vehicle may be transmitted to the demand vehicle for determination of distance at the demand vehicle, and/or movement data of the supply vehicle and the demand vehicle may be sent to a processor exterior to both vehicles (e.g., a cloud our another vehicle) for determination of distance.

According to various embodiments, a vehicle may be configured (optionally only as) as a demand vehicle configured to and capable of carrying out the method of requesting remote treatment, or may be configured (optionally only as) to and capable of carrying out the method of receiving a request for treatment and carrying out the treatment, or may be configured to perform to and capable of carrying out both methods, thus functioning at a time as a demand vehicle and at another time as a supply vehicle, as needed.

In one example comprising two vehicles crossing the geofenced area, a supply vehicle may receive a RQST for treatment capacity. For example, a demand vehicle of a fleet may determine that there is a demand for air treatment, and send a request RQST for treatment capacity to a supply vehicle. Said request may include a demand DEM1, e.g., mass of particles to be retained by a filter of the supply vehicle. The supply vehicle may determine that it is able to carry out the air treatment for the demand, for example if a capacity CAP1 of the supply vehicle is greater or equal than the demand DEM1. The supply vehicle may, after the determination, send an acknowledgement ACK (e.g., to the demand vehicle) and start performing the air treatment. Alternatively, the supply vehicle may after the determination, send an acknowledgement ACK (e.g., to the demand vehicle) and wait to receive a confirmation CONF, and start performing the air treatment only after receiving the confirmation CONF. It is understood that the example is not limiting any variations thereto are possible, for example the supply vehicle could send its status data to the demand vehicle and the demand vehicle may carry out determination that the supply vehicle has enough capacity for the demand. Alternatively, some of the determinations may be performed exterior to any of the vehicles, e.g., in a cloud to which both vehicles communicate.

In another example comprising two vehicles crossing the geofenced area, a supply vehicle may receive a RQST for treatment capacity. For example, a demand vehicle of a fleet may determine that there is a demand DEM1 for air treatment, and send a request RQST for treatment capacity to a supply vehicle. The supply vehicle may determine that there is a capacity CAP1 greater than zero, e.g., in the form of a mass of particles to be retained by a filter of the supply vehicle. The supply vehicle may, after the determination, send an acknowledgement ACK (e.g., to the demand vehicle), which may include the capacity CAP1. The supply vehicle may receive a confirmation CONF, for example, the demand vehicle may compare the CAP1 with its demand and determine whether it can use CAP1 (e.g., it may be sufficient to cover the demand or a portion of the demand, CAP1≥DEM1?) and send the confirmation CONF to the supply vehicle. The supply vehicle may start performing the air treatment after receiving the confirmation CONF. It is understood that the example is not limiting any variations thereto are possible, for example the supply vehicle could send its status data to the demand vehicle and the demand vehicle may carry out determination that the supply vehicle has enough capacity for the demand. Alternatively, some of the determinations may be performed exterior to any of the vehicles, e.g., in a cloud to which both vehicles communicate. In another variation, the supply vehicle may be configured carry out different method variations depending on the type or format of request received, for example, the supply vehicle may be configured to receive a request for air treatment RQST, in the case the request is without demand data the supply vehicle may send the available capacity, and in the case that the request includes demand data, the supply vehicle may perform the determination if capacity >= demand, and only send an acknowledgement ACK if the determination is positive or, optionally send a partial acknowledgement with the capacity < demand. This allows for flexibility, since the demand vehicle may have different reasons for requesting capacity, while a first require may need a limited capacity a second reason may require any available capacity. Thus, overall air treatment may be improved given that the method and the control circuit accept various types of requests.

As used herein and in accordance with various embodiments, the first vehicle and the second vehicle, or further vehicle(s) of the two or more vehicles are a fleet by the fact that they can operate together for air treatment - not necessarily because they are the same type or belong to same company. For example, other vehicles may be part of local traffic but not part of the fleet.

According to various embodiments, the fleet may include three or more vehicles, wherein a first vehicle is configured to request a plurality of vehicles, including at least a second vehicle, to provide air treatment, and wherein each vehicle of the plurality of vehicles is capable of receiving the request and control a respective air treatment system to increase treatment capacity.

An aspect of the disclosure concerns a method of treating environmental air. The method may include receiving, by a communication interface of a supply vehicle, a request for treatment, from a demand vehicle. According to various embodiments, the request for treatment may include a pre-determined distance, time, velocity vector, or a combination thereof. The method may further include determining, by a control circuit of the supply vehicle, that an air treatment system has an additional treatment capacity available. The method may further include sending, by the communication interface of the supply vehicle, an acknowledgement from the supply vehicle. The method may further include by the control circuit of the supply vehicle, controlling the air treatment system of the supply vehicle to increase treatment capacity. As used herein and in accordance with various embodiments, controlling the air treatment system may include the meaning of operating the air treatment system.

According to various embodiments, the method may further include sending, by the demand vehicle, a request for air treatment by a communication interface to a supply vehicle. The method may further include receiving, by the demand vehicle, an acknowledgement from the supply vehicle.

According to various embodiments, the method may further include, by the demand vehicle, determining that there is an air treatment demand by determining that there is a local treatment requirement unsatisfied by the treatment system, before sending the request for air treatment. In this context, the term "local" means from the demand vehicle.

According to various embodiments, the method may further include providing (e.g., recording), on a local memory of the supply vehicle, data indicative of the additional treatment capacity utilized. In examples, the memory may be implemented as any electronic circuit capable of storing information, such as based on D-flip-flips, and/or flash memory. In examples, the memory may be, without limitation, a local memory, a remote memory, a cache, a general purpose register, a register of a communication interface, or a combination thereof. According to various embodiments, the acknowledgement may include data indicative of an additional treatment capacity.

According to various embodiments, controlling the air treatment system to increase treatment capacity may include the meaning to increase the treatment capacity by the additional treatment capacity.

According to various embodiments, receiving a request for treatment may include receiving data indicative of a demand. Determining that the air treatment system has additional treatment capacity available may include determining that the additional treatment capacity is greater or equal to the demand.

According to various embodiments, the method may further include before controlling the air treatment system to increase treatment capacity, receiving a request confirmation, optionally including a microtransaction (such as a micropayment) or micropayment indication data. The acknowledgement may include data indicative of a cost rate of the additional treatment capacity.

According to various embodiments, the method may include sending, from the supply vehicle, data indicative of the additional treatment capacity utilized.

According to various embodiments, the method may include receiving, by the demand vehicle, the data indicative of the additional treatment utilized.

### Air treatment system and filter details

According to various embodiments, an immobile environmental air treatment system is also named as stationarily mounted environmental air treatment system. Use of stationarily mounted environmental air treatment system, e.g., ambient air purifiers for separation of airborne pollutants. Such devices may comprise a housing that can be flowed through, provided with an inlet and an outlet in which one or a plurality of blowers and a filter are arranged, wherein the filters can be conventional filter elements of porous, air-permeable filter media and/or electrostatic separators. The ambient air purifiers may be installed advantageously at locations with increased pollutant concentration, for example, in outdoor spaces in the geofenced area.

The air treatment system in accordance with various embodiments, may be provided in particular for stationary ambient air filtration and comprises a blower housing that comprises at least one air inlet and at least one air outlet. In the blower housing, at least one device for generating an air flow is arranged by means of which an air flow from the air inlet to the air outlet can be generated. The filter device comprises at least one air conducting channel that has a first open end as well as a second closed end. With the first open end, the air conducting channel is connected to the air outlet of the blower housing. In the air conducting channel, between the first and the second end, at least one opening is provided at which at least one filter element is arranged that separates a raw side inside of the air conducting channel from a clean side which is downstream of the filter element. According to one embodiment, the filter element can be inserted into the at least one opening.

According to various embodiments, the air conducting channel comprises a reduced air permeability in comparison to the at least one filter element. In this way, it is achieved that as little as possible unfiltered air escapes through the air conducting channel and the major portion of the air must pass through the filter elements for filtration.

The air treatment system in accordance with various embodiments, may include an air filter.

According to various embodiments, the vehicle may include the air treatment system. As used herein and in accordance with various embodiments, the term environment air may refer to air which is exterior to a vehicle's passenger cabin, example, ambient air also named as air surrounding the vehicle and may pass the vehicle during air treatment by the air treatment system.

The vehicle may be a motor-powered vehicle, for example having 2, 3, 4, or more wheels. Examples of the vehicle are passenger car, truck, buss, lorry, or a rail vehicle, for example a locomotive. The vehicle may include an air inlet opening upstream from the air treatment system (e.g. in a front region), for allowing air ingress and an air outlet, downstream from the air treatment system, for allowing air egress. The air inlet opening behind which the ambient air cleaning device is present may in particular be a cooling air inlet opening and may for example be covered by a radiator grille. For example, this may be at the same level as the front headlights with respect to the vertical axis of the vehicle, or may be located below or above them. The cross-sectional area of the air intake opening may be as large as possible so that the largest possible volume of air can be supplied. In some embodiments, the vehicle may be an electric vehicle or a hybrid (internal combustion engine and electrical) vehicle. In some embodiments, the vehicle may be an internal combustion engine (ICE) vehicle (*i.e*., non-hybrid). For example, such battery of an ICE vehicle may have a relatively large capacity and may operate the fan for a long time (e.g., 1h or more) without significant drain even if it is not being charge by an alternator. In some embodiments, the vehicle comprises an internal combustion engine and a cooling fluid temperature (from the hot side) may be used as representation of the engine temperature. In some embodiments, the vehicle comprises a fuel cell and a cooling fluid temperature (from the hot side) may be used as representation of the fuel cell temperature. In some embodiments, the vehicle comprises a battery and a thermal exchange system (comprising a coolant fluid) may be envisaged for control the temperature of the battery.

According to various embodiments, the blower may be a fan. The fan may be an electrical fan. In accordance with various embodiments, the fan may operate within a speed range of fan influence (and not operate out of said range), which may be a speed range in which operation of the fan is able to alter the air flow (e.g., the volumetric air flow in m³/s or the mass airflow in kg/s). In otherwords, out of the speed range of fan influence (within the speed range of non-fan influence) the air flow is substantially determined by the speed of the vehicle and is not alterable by the operation of the fan. Thus, not operating the fan out of the speed range of fan influence saves energy. Speed range of fan influence and the speed range of non-fan influence may be determined by measuring the airstream speed for different vehicle speed with the fan turned at this maximum nominal operation speed. Such measurement may be performed when there is no wind (*i.e*., external wind that would influence the measurements) and at a known temperature, e.g., T=30 °C, without any adverse weather event. With these measurements, a threshold of fan influence may be determined which may be specific for the vehicle type and/or air treatment system type. According to various embodiments, the speed range of fan influence may be from 0 km/h until the threshold of fan influence, and speed range of non-fan influence may be from speeds above the threshold of fan influence. The measurements may be performed for a specific car type and a specific fan type. The results of the measurements may be stored in a vehicle's memory (also named herein as computer memory of the vehicle) for later access, for example, the measurements may be stored in processed form as the pre-determined threshold of fan influence, the speed range of fan influence, or the speed range of non-fan influence. The pre-determined threshold of fan influence may be a single value, optionally including a hysteresis. Alternatively, the pre-determined threshold of fan influence may be different values, which depend on the direction of change of the vehicle speed (accelerating or decelerating) and/or may be offset by a hysteresis. The hysteresis may also be stored in the vehicle's memory for later access.

According to various embodiments, the control circuit may be an or part of an ECU, however the disclosure is not limited thereto. Alternatively, the control circuit may be a separate circuit which is operably connectable with the ECU. In another alternative, the control circuit may comprise a separate circuit and an ECU, the separate circuit operably connectable with the ECU. Similarly, the memory may be in one or distributed in more than of abovementioned devices. Operably connectable may include the meaning of connectable via a data communication bus such as CAN bus.

While some embodiments are explained in connection with a vehicular air treatment systems, these may apply as well to immobile air treatment systems.

According to various embodiments, the control circuit may obtain weather data, air quality, and/or air temperature by receiving the data from sensors integrated in (e.g., fixed to) the vehicle, for example upstream of an air treatment means, such as a filter. The sensor or sensors may be configured to measure one or both of: air temperature, air quality data, air relative humidity. A rain sensor may also provide may provide rain information.

According to various embodiments, air quality data may include one or more of PM10 concentration, PM2.5 concentration, PM1 concentration, relative humidity, VOC concentration, NOx concentration. In various embodiments, air quality data may include at least one particulate matter concentration is measured.

Alternatively or in addition to obtaining data from the sensors of the vehicle, said data (or part thereof) may be obtained from a weather database that is external to the vehicle (e.g., via wireless communication), for example from a cloud. Such weather database may be a weather database, e.g., as it is provided by weather service providers. The wireless communication may be provided without limitation, by the cellular infrastructure (3G, 4G, 5G, 6G and above), and/or WIFI. The weather database may provide information such as data representing adverse weather event, and/or air quality data.

Adverse weather event as used herein and in accordance with various embodiments may mean at least one of: snow, rain, sand storm, volcanic ash fall.

According to various embodiments, the air treatment system may be a filtration system comprising a filter as a treatment means. The filter may be a particle filter, for example, a PM10 filter, a PM2.5 filter, or a PM1 filter. The filter may be a fine dust filter.

According to various embodiments, the filter has at least one filter element which may include at least one filter medium which may be folded into at least one filter bellows. The filter may include a plurality of fold stabilizing means which support the filter bellows and are present at a lateral distance of e.g., not more than 150 mm from one another, and for example at least 15 mm from one another, for example 70 mm. It may be provided that the filter medium has an intrinsic bending stiffness of at least 1 Nm², for example, at least 2 Nm². This refers to an intrinsic bending stiffness of the filter medium, i.e. in an unprocessed/unfolded state. The filter may comprise pleat stabilizing means. The filtration system may comprise one water separating device.

According to various embodiments, the depth of the filter element in the longitudinal direction of the vehicle may be less than 150 mm, for example less than 110 mm. The depth is preferably not be less than 15 mm, since otherwise the usable filter area would be very low. In one embodiment of the application, the dimensions of an inflow surface of the ambient air purification device may be, for example, 45 cm (height) x 65 cm (width) for a typical mid-size passenger car. Depending on the size of the vehicle, however, significant deviations from this are possible, so that a range of dimensions from 20 cm in width to 120 cm in width and 15 cm in height to 100 cm in height are possible in principle.

According to various embodiments, the filter medium of the filter element of the ambient air purification device may be a single-layer or multi-layer filter medium, which may be water-resistant. It may be a multi-layer medium comprising at least one drainage layer and/or one pre-separator layer. Alternatively or additionally, the filter medium may comprise or consist of glass fibres and/or plastic fibres, in particular polyester and/or polyethylene. Finally, it may also be provided that the filter medium has a porosity gradient in a thickness direction, preferably in such a way that a pore size decreases in the direction of airflow.

According to various embodiments, depending on the design of the filter element (volume flow pressure loss characteristic), it can be achieved in conjunction with the fan that the fine dust emissions of the vehicle are completely compensated by the ambient air cleaning device, so that it is a zero-emission vehicle in terms of dust, e.g., in terms of PM10 or PM2.5. For a typical medium-class passenger car, the total particulate matter emission is about 25 mg/km.

According to various embodiments, the filter may include a filter frame, for example, at least partially circumferential frame in which the filter element (e.g., filter bellows) is accommodated. In an example, it may be provided that the frame has an L-shaped cross-sectional form, e.g., wherein one leg of the L-shaped cross-section of the frame engages behind the filter bellows of the filter element, and thus supports it counter to the effect of dynamic pressure. The filter may comprise two or more filter elements, and the filter elements may be arranged in (e.g., fixed to) a single filter frame, or alternatively, each filter element may be arranged in a separate frame element of a filter frame.

According to various embodiments, the filter element may in particular comprise or be a plastic-molded filter element, wherein the at least partially circumferential frame may be connected to the filter medium by a material-to-material bond. However, the invention is not limited to a material connection; as an alternative to the material connection of the filter medium to the frame, it may also be provided that the filter element is merely inserted into the frame, so that it is supported in a form-fitting manner on the rear leg of the L-profile.

According to various embodiments, the filter may be arranged (and arrangeable) into the receptacle. The receptacle may be fixed to the vehicle and may corresponds to the frame of the filter, in which the filter is held, optionally by detachable fastening means, e.g., a clip connection. The receptacle may further be configured to function as a mounting shaft, into which the at least one filter element may be linearly inserted. This makes it easy to replace the filter element, for example from the upper side of a lock carrier of a front hood or from an underbody side which is easily accessible, for example, during servicing on a lifting platform.

In some embodiments, it may further be provided that the filter is arranged with respect to a heat exchanger in such a way that it covers no more than 75% of an incident flow surface of the heat exchanger, so that sufficient residual heat dissipation is possible even when the filter element is loaded. In order to achieve this, the filter element can be arranged offset from the heat exchanger about the vertical and/or transverse direction of the vehicle. The non-covered portion of the heat radiator may form a bypass which may be openable and closeable. In other embodiments, the bypass may be an openable/closeable air passage which is independent from the heat exchanger surface, and the filter and the heat exchanger may be apart from each other at a distance sufficiently large to allow flow of air through the heat exchanger when the bypass is open, and even when the filter is loaded.

As used herein and in accordance with various embodiments, a required capacity may also be referred to as a demand, and vice-versa. A demand may be determined from the vehicle emissions, e.g., the current vehicle emissions which may be measured or calculated based on one or more of: engine, fuel parameters, filter status, catalysator status as known in the art.

As used herein and in accordance with various embodiments, a capacity may be determined based on a filter status and filter parameters. For example, filter status could be determined based on the history of the filter usage and/or calibration data. Alternatively or in addition, a capacity could be determined via sensors, example pressure differential measurements across a filter medium, and based on a calibration curve, the filtration capacity can be determined. Other methods for determining remaining filter capacity are know to the skilled person in the art.

The below description will detail more embodiments using the geofence.

Various embodiments relate to a method of treating environment air including determining that a route of a demand vehicle overlaps with a geofenced area. The geofenced area may be a physical area which is virtually fenced. The method may include determining that there is an air treatment demand requirement at a demand vehicle, for example, by determining that net emissions of the demand vehicle may be above a pre-determined limit for the geofenced area. The method may include calculating an air treatment demand, which may be an amount to offset net emissions of the demand vehicle, for example, at least partially offset or totally so that net emissions of the demand vehicle satisfy the pre-determined limit for the geofenced area. The method may include controlling an air treatment system to carry out air treatment within the geofenced area. The method may include controlling an air treatment system to carry out air treatment within the geofenced area. The air treatment system may be an air filtration system, for example, for filtering particulate matter.

As used herein and in accordance with various embodiments, emissions (e.g., as in net emissions) when used in connection to a vehicle may refer to an emission rate, for example emission of a pollutant over a unit of time.

According to various embodiments, the air treatment system may be external to the demand vehicle. According to some embodiments, the air treatment system may be onboard of the demand vehicle. Alternatively the air treatment system may be an immobile air treatment system located in the geofenced area.

According to some embodiments, the air treatment system may be part of a supply vehicle. According to some embodiments, the method, may include determining that the supply vehicle crosses the geofenced area. In some embodiments, the determination may be positive if the vehicle is crossing the geofenced area in an overlapping (e.g., the same) time as the demand vehicle, in other embodiments, during an overlap time or a pre-determined time duration, and in yet other embodiments, the determination is positive if the supply vehicle crosses the geofenced area in the future or in the past in relation to the time that the demand vehicle is within the geofenced area. Further details of these embodiments will be explained below.

According to some embodiments, an overlap time is a time period of pre-determined duration in which the demand vehicle and the supply vehicle, are concurrently in the geofenced area. According to some embodiments, a pre-determined time duration may not necessarily have any overlapping times, but may be a time period of pre-determined duration in which each of the supply and demand vehicle are in the geofenced area, optionally, but not necessarily concurrently. If not concurrently, the time period of pre-determined duration may be named as a non-overlap time.

According to various embodiments, the supply vehicle may be an e-vehicle or a hybrid electrical vehicle.

According to various embodiments, the method may further include determining one or more of:
- time of entry of the demand vehicle in the geofenced area;
- time of exit of the demand vehicle from the geofenced area;
- time of residence of the demand vehicle in the geofenced area;
- travel distance of the demand vehicle within the geofenced area. For example, the method may include determining the time of entry and the time of exit of the demand vehicle from the geofenced area. Both times may be stored and/or the time of residence (e.g., calculated duration) may be stored for later use. Alternatively, or in addition, an electronic timer may be started at entry and stopped at exit for determining the time of residence. This may be an option, for example, when the exact times of entry and exit are not required. In other examples, a travel distance may be determined. The time of residence, or travel distance, or a combination of both, may be used as indicator of emissions or to calculate an estimated amount of emissions.

According to various embodiments, the method may further include determining one or more of:
- time of entry of the supply vehicle in the geofenced area;
- time of exit of the supply vehicle from the geofenced area;
- time of residence of the supply vehicle in the geofenced area;
- travel distance of the supply vehicle within the geofenced area. For example, the method may include determining the time of entry and the time of exit of the supply vehicle from the geofenced area. Both times may be stored and/or the time of residence (e.g., calculated duration) may be stored for later use. Alternatively, or in addition, an electronic timer may be started at entry and stopped at exit for determining the time of residence. This may be an option, for example, when the exact times of entry and exit are not required. In other examples, a travel distance may be determined. The time of residence, or travel distance, or a combination of both, may be used as indicator of utilized air treatment capacity or to calculate an estimated amount of utilized air treatment capacity.

According to various embodiments, the method may include determining that no sufficient capacity of air treatment is available and rerouting the demand vehicle to steer away from the geofenced area. No sufficient capacity available for air treatment may be due to no available supply vehicle within the given conditions (e.g., passing the geofenced area at the same time) and/or due to an air treatment system being loaded (e.g., an air filter may be loaded, optionally fully loaded). This may be used to avoid the demand vehicle to being taxed, or to reduce already occurring taxes. Alternatively, the user may be prompted, via an electronic to user interface (e.g., display and button or microphone and speaker) to confirm the passage through the geofenced area and the connected payment. Payment may be, e.g., a tax, a toll, emission credits, micropayments, decentralized digital currency, or another system.

According to various embodiments, the method may include determining that an amount of treatment carried out by the air treatment system is lower than the air treatment demand and storing data indicative of the difference in memory. This may indicate a partial compensation of emissions, short of what is required. Thus, the data indicative of the difference may be retrieved for payment. Payment may be, e.g., a tax, a toll, emission credits, micropayments, decentralized digital currency, or another system.

According to various embodiments, the method may include activating the geofence at a pre-determined start (e.g. of a peak period) and deactivating the geofence at a pre-determined end (e.g., of the peak period). Activating may mean turning on a flag, and deactivating may mean turning of a flag indicative of activation state for the geofence. The flag may be comprised by a dataset comprising geo data indicative of the virtual geofence. Alternatively, or in addition, a dataset comprising geo data indicative of the geofence may comprise activation times and deactivation times, which may be compared to a current time for determining an activation state. In some embodiments, the method may further include detecting these times and processing the method steps only when the current time is within these times.

According to some embodiments, the dataset comprising geo data indicative of the virtual geofence may form a simple polygon wherein the vertices are geographical coordinates. According to various embodiments, the geofenced area may include a virtual fence that may be based on a global coordinate positioning system, such as, for example, agps, gps, mobile gps, galileo, or equivalents.

According to various embodiments the geofenced area may be based on physical traffic signs, and the method further may include performing automated traffic sign recognition, for example, at the demand vehicle.

According to some embodiments, determining that a route of a demand vehicle overlaps with the geofenced area (GEO1) may include providing a time of entry in the geofence; providing a time of exit of the geofence; and calculating a time difference between the time or entry and the time of exit. The method step of determining that there may be an air treatment demand requirement at a demand vehicle may include determining that net emissions of the demand vehicle are above a pre-determined limit for the geofenced area. And, in turn, determining that net emissions of the demand vehicle are above a pre-determined limit for the geofenced area, may include calculating an estimated emission, for example, based on the time difference and of nominal emissions, or based on the time difference and measured emission.

To determine exit and entry times, known procedures may be used, such as geometric or GIS (e.g., point in polygon determination) to determine whether there is a crossing of a boundary of the geofenced area and matching it with the recorded or routed route data for obtaining the correspondent time.

According to various embodiments, determining that a route of a demand vehicle overlaps with the geofenced area may include providing a travelled distance travelled by the vehicle within the geofenced area, and may further include determining that there may be an air treatment demand requirement at a demand vehicle. Determining that there may be an air treatment demand requirement at a demand vehicle may include determining that net emissions of the demand vehicle is above a pre-determined limit for the geofenced area. And, in turn, determining that net emissions of the demand vehicle is above a pre-determined limit for the geofenced area may include calculating an estimated emission based on the travelled distance and nominal emissions, or calculating an estimated emission based on the travelled distance and measured emissions.

According to various embodiments, determining that a route of a demand vehicle overlaps with the geofenced area may include determining whether a position of the demand vehicle is currently within the geofenced area, and may further include aggregating route data points (to obtain a total time, a total travelled distance, and/or a total emissions, in the geofenced area) until the geofenced area is exited or calculate time of entry and exit, and calculate the time difference. For example, store and sum up time later or aggregate time on a register.

According to various embodiments determining that a route of a demand vehicle overlaps with the geofenced area may include calculating a route. The route may be a future route or a current route which includes at least a future route portion. The method may include determine that the vehicle, according to the pre-determined route, has not yet exited the geofence. Determining that a route of a demand vehicle overlaps with the geofenced area may further include determining in advance a travel distance or an estimated travel time. Optionally selecting highest estimated amount of pollution may be determined amongst an estimated amount of pollution by travel distance and an estimated amount of pollution by travel time. Further, it may be determined that there is an air treatment demand requirement at a demand vehicle may include determining that net emissions of the demand vehicle may be above a pre-determined limit for the geofenced area. Determining that net emissions of the demand vehicle is above a pre-determined limit for the geofenced area may include determining an amount of pollution associated with the demand vehicle travelling through the geofenced area, based on a pollution rate by time and the travel time, or on a pollution rate by distance and the travel distance.

Some embodiments relate to a method as described herein, wherein the air treatment system further includes an air filter, for example a particulate filter.

Various aspects of the present disclosure relate to a system configured to carry out the method in accordance with various embodiments.

While several embodiments are explained in connection with vehicles, the embodiments detail and explain an air treatment system suitable for use in a vehicle, e.g., to be installed in and/or be part of a vehicle and a method of treating environmental air.

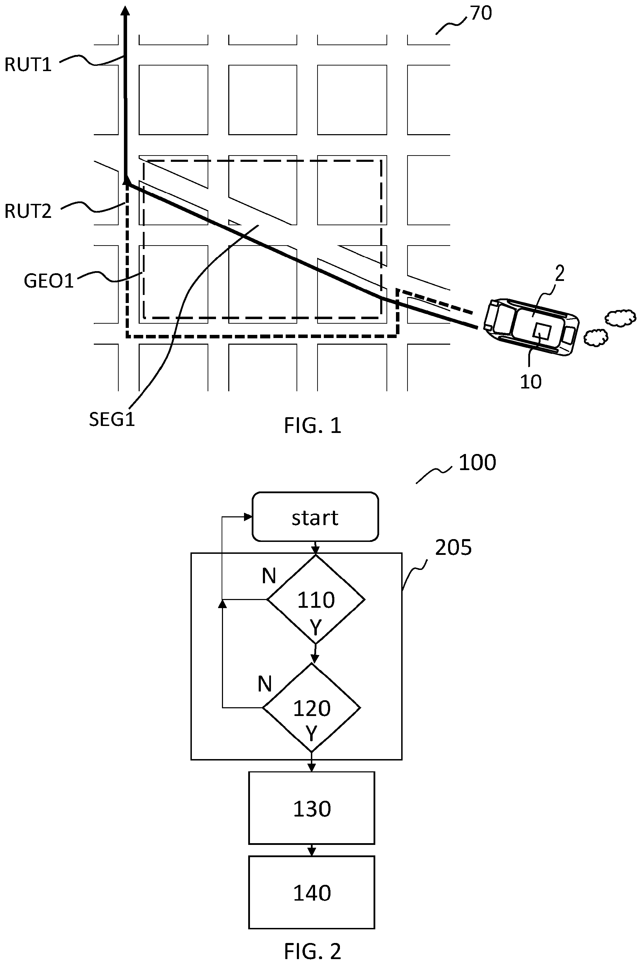

**FIG. 1** shows a schematic map of an urban area 70 including roads and city blocks delimited by the roads. A vehicle 2 that is crossing the urban area 70 is shown, the vehicle may cross a geofenced area GEO1 as indicated by route segment SEG1. The map corresponds of a physical urban area and the geofence corresponds to a portion of the physical area (virtually fenced). **FIG. 2** shows an exemplary flow chart of the method 100, which is not limited thereto, for example steps 110 and 120 may be reversed or done in parallel followed with an a logical AND combination of the results.

According to various embodiments, the method 100 of treating environment air may include determining 110 that a route RUT1 of a demand vehicle 2 overlaps with a geofenced area GEO1. The method 100 may further include determining 120 that there is an air treatment demand requirement at a demand vehicle 2. The method 100 may further include calculating 130 an air treatment demand DEM1, which may be an amount to offset net emissions EM2 of the demand vehicle 2. For example, the amount to offset may be at least a partially offset, optionally, a total offset, so that net emissions EM2 of the demand vehicle 2 satisfies the pre-determined limit LIM1 for the geofenced area GEO1. The method 100 may further include controlling 140 an air treatment system 10 (e.g., air filtration system) to carry out air treatment within the geofenced area GEO1.

In some embodiments, the demand may be on vehicle 2, and the air treatment system 10 may be on the same vehicle or on a supply vehicle 1', thus demand vehicle 2 may be its own supply vehicle. In other embodiments, the demand vehicle is a different vehicle from the supply vehicle.

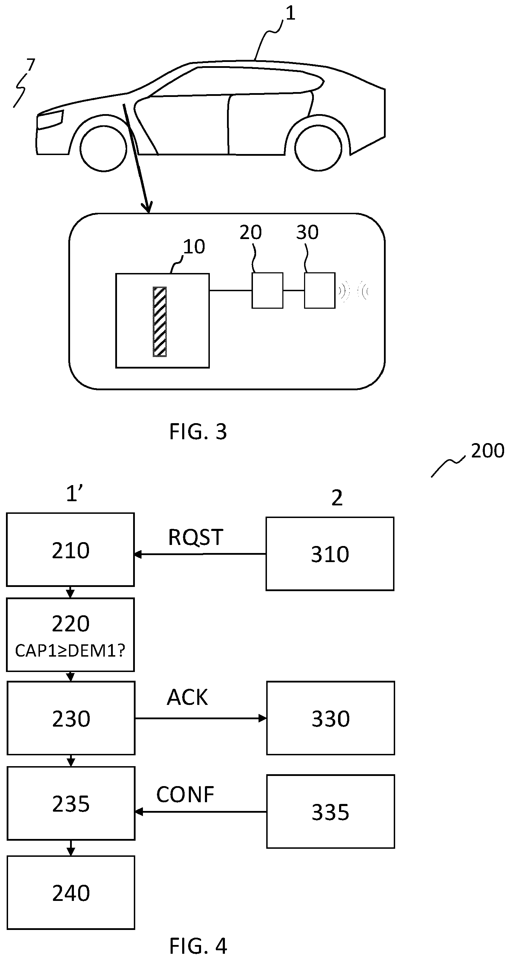

**FIG. 3** shows a vehicle 1 including an air treatment system 10 for treating environment air 7. The vehicle may further include a control circuit 20 to control the air treatment system 10, the control circuit 20 may be external to or comprised by the air treatment system 10. The vehicle may further include a communication interface 30 configured to wirelessly send and receive commands external to the vehicle 1 and operably coupled to the control circuit 20, for example, to a demand vehicle 2 if vehicle 1 is or has the role of a supply vehicle, or to a supply vehicle 1' if vehicle 1 is or has the role of a demand vehicle. The communication interface 30 may be external to or comprised by the air treatment system 10.

**FIG. 4** is used to illustrated how the method of treating environmental air may be run concomitantly on a demand and a supply side, and how a vehicle 1 may be configured to as supply vehicle or as a demand vehicle, depending on its role. The flowchart of FIG. 4 is separated into left side of supply vehicle 1' and right side of demand vehicle 2.

According to various embodiments, the method 200 may further include sending 210, by the demand vehicle 2, a request RQST' for air treatment by a communication interface 30 to a supply vehicle 1'. The method 200 may include receiving 210, by a communication interface 30 of a supply vehicle 1', a request RQST for treatment from a demand vehicle 2. The method 200 may further include determining 220, by a control circuit 20 of the supply vehicle 1', that an air treatment system 10 has an additional treatment capacity available. The method 200 may further include sending 230, by the communication interface 30 of the supply vehicle 1', an acknowledgement ACK from the supply vehicle 1'. The method 200 may further include receiving 330, by the demand vehicle 2, an acknowledgement ACK from the supply vehicle 1'. In some embodiments, the method may include, sending 335, by the demand vehicle 2, a confirmation CONF and receiving 235, by the supply vehicle 1', the confirmation CONF, by such further step, it is possible, e.g., to send with the ACK an available capacity, and the supply vehicle 1' has the option to confirm that it will use the available capacity. The method 200 may further include by the control circuit 20 of the supply vehicle 1', controlling 240 the air treatment system 10 of the supply vehicle 1' to increase treatment capacity. Controlling 240 the air treatment system 10 may include operating the air treatment system.

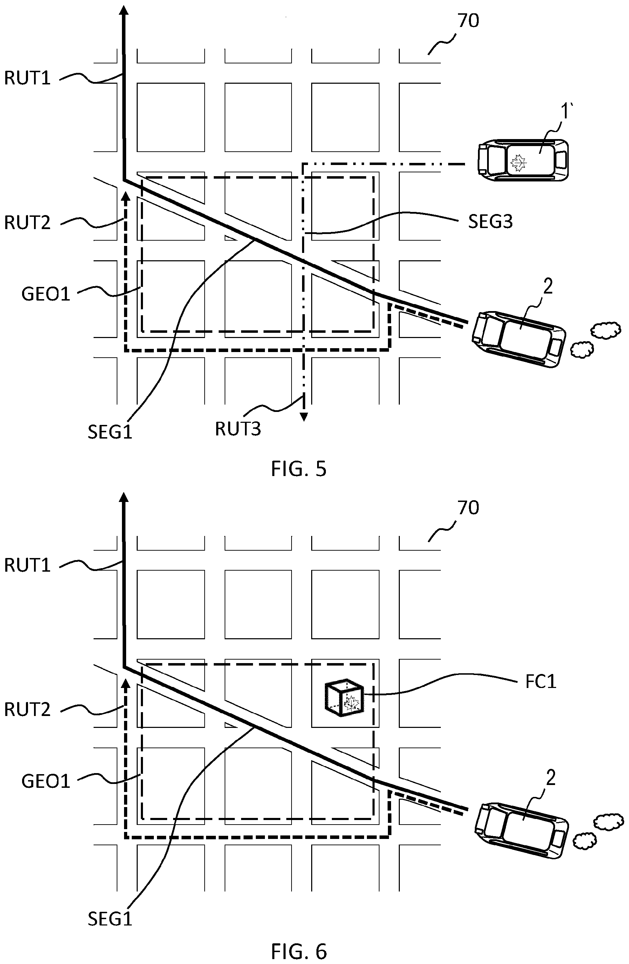

According to various embodiments, the air treatment system 10 may be part of a supply vehicle 1'. **FIG. 5** shows an example wherein a rout RUT1 of a demand vehicle 2 crosses a geofenced area GEO1, indicated by the route segment SEG1. A supply vehicle 1' is also represented, the supply vehicle 2 has a route RUT3 that also crosses the geofenced area GEO1, represented by the route segment SEG3.

In the method 100, it may be determined that the supply vehicle 2 crosses the geofenced area GEO1. For example, determining that a vehicle crosses the geofenced area GEO1 may be implemented as (i) determining that the vehicle is currently crossing the geofenced area GEO1, or (ii) determining that the vehicle will cross the geofenced area GEO1 in the future (e.g., within a time slot), or (iii) determining that the vehicle has crossed the geofenced area GEO1. In some embodiments, the method may check for two or all threee options (currently crossing, future crossing, past crossing) and combine the result, which may be, or be equivalent to, a logical OR combination.

According to some embodiments, determining 110 that a route RUT1 of a demand vehicle 2 overlaps with the geofenced area GEO1 may include: providing 114 a travelled distance travelled by the vehicle within the geofenced area GEO1, and may further include determining 120 that there may be an air treatment demand requirement at a demand vehicle 2. Determining 120 may include determining 122 that net emissions of the demand vehicle 2 may be above a pre-determined limit LIM1 for the geofenced area GEO1. Determining 122 may include calculating an estimated emission based on the travelled distance and nominal emissions / or measured emission by summation.

According to some embodiments, determining 110 that a route RUT1 of a demand vehicle 2 overlaps with the geofenced area GEO1 may include determining 116 whether a position of the demand vehicle 2 may be currently within the geofenced area GEO1 and aggregate route until completed or calculate time of entry and exit. For example, the co-presence time slot points may be store and summed up time later, or may be aggregate to a total on a register.

According to some embodiments, determining 110 that a route RUT1 of a demand vehicle 2 overlaps with the geofenced area GEO1 may include: calculating 117 a route,
current pre-determined route not yet exited, or a pre-determined route not yet entered the geofence; and may further include determining 118 in advance a travel distance or an estimated travelling time [optionally selecting higher value. The determining 110 may further include determining 120 that there is an air treatment demand requirement at a demand vehicle 2. Determining 120 may include determining 122 that net emissions of the demand vehicle 2 are above a pre-determined limit LIM1 for the geofenced area GEO1. Determining 122 may include determining an amount of pollution associated with the demand vehicle 2 travelling through the geofenced area GEO1, based on a pollution rate by time and the travel time, or on a pollution rate by distance and the travel distance.

According to various embodiments, the method 100 may include, determining one or more of:
- time of entry of the demand vehicle 2 in the geofenced area GEO1;
- time of exit of the demand vehicle 2 in the geofenced area GE01;
- time of residence of the demand vehicle 2 in the geofenced area GEO1;
- travel distance of the demand vehicle 2 within the geofenced area GEO1.

According to various embodiments, the method may include determining the time of entry and the time of exit of the demand vehicle 2 from the geofenced area GEO1. Both times may be stored and/or the time of residence (e.g., calculated duration) may be stored for later use. Alternatively, or in addition, an electronic timer may be started at entry and stopped at exit for determining the time of residence. This may be an option, for example, when the exact times of entry and exit are not required. In other examples, a travel distance may be determined. The time of residence, or travel distance, or a combination of both, may be used as indicator of emissions or to calculate an estimated amount of emissions.

For example, and with reference to FIG. 5 for illustration purposes, a time of entry of the demand vehicle 2 into the geofenced area GEO1 may be the time the route of the demand vehicle 2 crossed, crosses, or is estimated to cross, from outside of the geofenced area GEO1 into the geofenced area GEO1. This time may be captured during the crossing (e.g., in real time), or may be determined from travelled route datapoints, or if for future use, it may also be estimated from a pre-determined route that the vehicle is bound to.

Similarly, and with reference to FIG. 5 for illustration purposes, a time of entry of the demand vehicle 2 into the geofenced area GEO1 may be the time the route of the vehicle crossed, crosses, or is estimated to cross, from a geofenced area GEO1 to outside the geofenced area GEO1. This time may be captured during the crossing (e.g., in real time), or may be determined from travelled route datapoints, or if for future use, it may also be estimated from a pre-determined route that the vehicle is bound to.

According to various embodiments, the method 100, may further include, determining one or more of:
- time of entry of the supply vehicle 1' in the geofenced area GEO1;
- time of exit of the supply vehicle 1' in the geofenced area GEO1;
- time of residence of the supply vehicle 1' in the geofenced area GEO1;
- travel distance of the supply vehicle 1' within the geofenced area GEO1.

For example, the method may include determining the time of entry and the time of exit of the supply vehicle 1' from the geofenced area GEO1. Both times may be stored and/or the time of residence (e.g., calculated duration) may be stored for later use. Alternatively, or in addition, an electronic timer may be started at entry and stopped at exit for determining the time of residence. This may be an option, for example, when the exact times of entry and exit are not required. In other examples, a travel distance may be determined. The time of residence, or travel distance, or a combination of both, may be used as indicator of utilized air treatment capacity or to calculate an estimated amount of utilized air treatment capacity.

For example, and with reference to FIG. 5 for illustration purposes, a time of entry of the supply vehicle 1' into the geofenced area GEO1 may be the time the route of the supply vehicle 1' crossed, crosses, or is estimated to cross, from outside of the geofenced area GEO1 into the geofenced area GEO1. This time may be captured during the crossing (e.g., in real time), or may be determined from travelled route datapoints, or if for future use, it may also be estimated from a pre-determined route that the supply vehicle 1' is bound to.

Similarly, and with reference to FIG. 5 for illustration purposes, a time of entry of the supply vehicle 1' into the geofenced area GEO1 may be the time the route of the supply vehicle 1' crossed, crosses, or is estimated to cross, from a geofenced area GEO1 to outside the geofenced area GEO1. This time may be captured during the crossing (e.g., in real time), or may be determined from travelled route datapoints, or if for future use, it may also be estimated from a pre-determined route that the vehicle is bound to.

According to various embodiments, the method 100 may further include determining that no sufficient capacity of air treatment is available and may further include rerouting the demand vehicle 2 to steer away from the geofenced area GEO1. The capacity is of the air treatment system which may be on the supply vehicle 1' or on an immobile system. Thus determining that no sufficient capacity of air treatment may include the meaning of determining that a an ambient air filtration system of a vehicle is fully loaded, or is already running at full capacity (e.g., blower at maximum rpm), and therefore no additional capacity is available. Rerouting may be useful, to reduce pollution peaks in the geofenced area GEO1. Further, it may also reduce pollution related taxes or tolls.

According to various embodiments, in case that the capacity for air treatment is lower than the demand, for example, if supply vehicle does not have additional capacity (e.g. blower already operating at maximum, or particulate air filter is fully loaded) then the method 100 may include changing the route of the vehicle 2 to avoid the geofenced area GEO1, e.g., into route RUT 2. In some embodiments, the decision as to whether route around or through the geofenced area GEO1 may be performed in advance to a start of the driving (during pre-vehicle operation routing), or may be in advance of entering the geofenced area GEO1, whiting a pre-determined rerouting time buffer.

According to various embodiments, the method 100 may further include determining that an amount of treatment available or carried out by the air treatment system 10 is lower than the air treatment demand DEM1 and storing data indicative of the difference in memory, so that it may be retrieved later, for example, if treatment data is needed for calculating local pollution, local emissions, or taxes applicable.

According to various embodiments the supply vehicle 1' may be an e-vehicle, a hybrid vehicle ICE/electric vehicle, or a fuel cell powered vehicle. Since, with air treatment system on and no operating internal combustion engine (e.g., operating in electric drive mode), the vehicle may have a positive environmental impact, optionally corresponding to monetary benefits, this may incentivize further adoption of such vehicles equipped with air treatment systems.

FIG. 6 is used to illustrate another embodiment in which the air treatment system is not part of a vehicle and is immobile. For example, the air treatment system 10 may be an immobile air treatment system FC1, which may comprise an air filter for filtering particulate matter, located in the geofenced area GEO1. Determining that a vehicle crosses the geofenced area GEO1 may include, determining an entry (e.g., a current entry is detected, or a future entry is routed) of the vehicle 2 into the geofenced area GEO1, and operating the air treatment system 10. The operation may proceed until the vehicle 2 exits (e.g., a current exit is detected, or a future exit is routed) the geofenced area GEO1, and optionally may proceed longer, after the vehicle 2 has exited the geofenced area GEO1 and until emissions' offset has been achieved. This may be advantageous, since the air treatment system 10 may be operated at a lower power, generating less noise but for a longer time thus still providing sufficient air treatment.

In another embodiment, determining that a vehicle 2 crosses the geofenced area GEO1 may include determining that the vehicle has completed the crossing, and has exited the geofenced area, and after the vehicle 2 has exited, operate (increase treatment capacity, e.g., turn on) the air treatment system 10. This may be advantageous as more exact data about travel distance (SEG1), time within the geofenced area GEO1, or emissions (or excess emissions) within the geofenced area GEO1 may be determined in a more conclusive manner, instead of relying to a future route or a portion thereof.

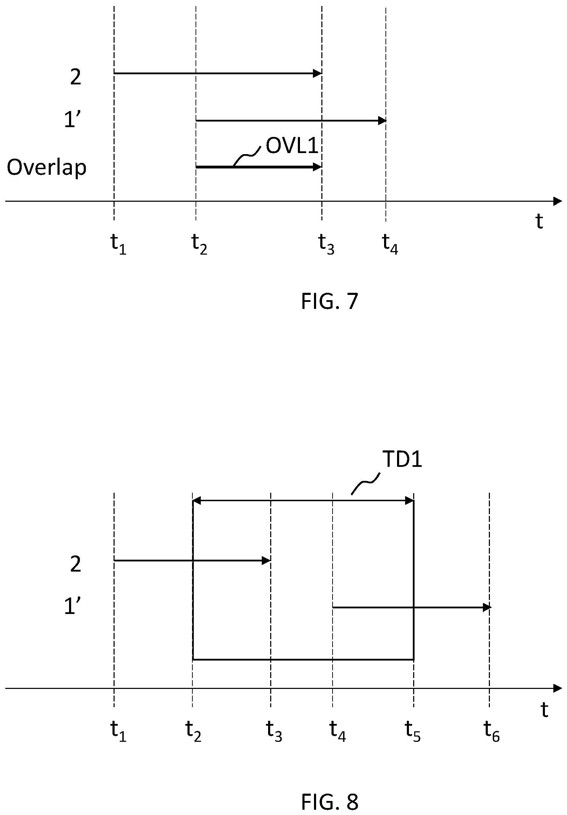

According to some embodiments, the demand vehicle 2 and the supply vehicle 1' may be within the geofenced area GEO1 during an overlap time OVL1. For example, as illustrated in FIG. 7 which shows a time diagram and the crossings (arrows) of when each of the vehicles is in the geofenced area GEO1. For instance, the crossing of the demand vehicle 2 may be between time t1 and t3, while the crossing of the supply vehicle 1' is from time t2>t1 and t4<t3. Only the overlap time OVL1 will be considered. As can be seen in FIG. 7, the overlap OVL1 is only between t₂ and t₃. This may allow for air treatment t a same time it is generated thereby reducing peak pollutant levels in the geofenced area GEO1.

According to some embodiments, the demand vehicle 2 and the supply vehicle 1' may be within the geofenced area GEO1 during pre-determined time duration TD1, for example, having a pre-determined duration but no fixed start and ending time, such as a rolling time window. FIG. 8 shows a time diagram in which the crossings in the geofenced area GEO1 of both vehicles is shown by arrows. The demand vehicle 2 enters the geofenced area GEO1 at time t₁ and exits at time t₃. The supply vehicle 1' enters the geofenced area GEO1 at time t₄ and exits at time t₆. Determining that a vehicle crosses the geofenced area GEO1 may include calculating if, there is any time window of pre-determined time duration TD1 in which both vehicles are in the geofenced area GEO1, even if not concomitantly. In the example, the demand vehicle 2 and the supply vehicle 1' are not in the geofenced area GEO1 at the same time, thus there is no overlap, however, both vehicles are within the geofenced area for some duration within a pre-determined time duration TD1. As illustrated, between a time t₂ and ts, each of the vehicles is in the geofenced area GEO1 for some time. This may have the advantage that emissions from the demand vehicle 2 are compensated by the supply vehicle 1' at a time close to the time they are generated by demand vehicle 2. It also allows for air treatment even if the demand vehicle 2 and the supply vehicle 1' are not in the geofenced area GEO1 at the same time, or having an overlap time too short for emission compensation.

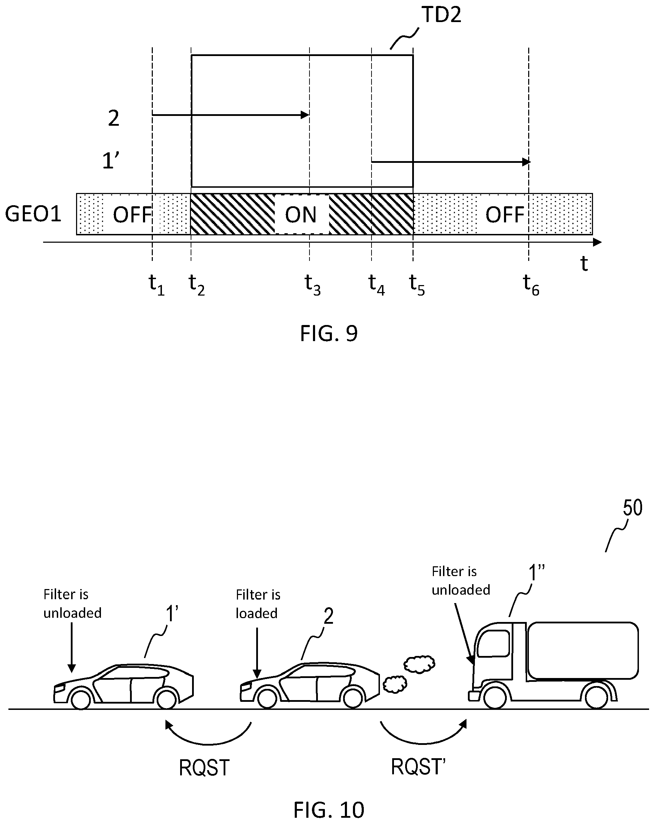

FIG. 9 shows a variation of the embodiment illustrated in connection with FIG. 8 wherein the start and end times of the time window TD2 are fixed. It may also be said that the geofenced area is "turned on" at the pre-determined start time and "turned off" at the pre-determined end time. For example, t₂ may be 08:00 and t₅ may be 10:00, representing the morning rush hour. In some embodiments, this window TD2 may be in addition to the overlap time or to the pre-determined time duration. Alternatively, the window TD2 may coincide with window TD1 of pre-determined time duration and further with a fixed start and end times. For example, as illustrated in FIG. 8, demand vehicle 2 may enter the geofenced area GEO1 at t₁=07:45 and exit at ts=9:15, while the supply vehicle 1' may enter the geofenced area at t₄=9:45 and exit the geofenced area at t₆=11:00. In the example, the geofenced area is "ON" during the pre-determined time duration TD1 from the pre-determined start time t₂ and until the pre-determined end time t₅. Thus, each vehicle will only be considered, for determining that a vehicle crosses the geofenced area GEO1, during the time the geofenced area is "ON", which for demand vehicle is from t₂ to ts, and for supply vehicle from t₄ to t₅.

According to various embodiments, the method 100 may include activating the geofence GEO1 at a pre-determined start t₂ (e.g. of a peak period) and deactivating the geofence GEO1 at a pre-determined end t₅ (e.g., of the peak period). As used herein and in accordance with various embodiments, pre-determined start and end means pre-determined start time and end time, respectively. According to various embodiments, the method may include activating the geofence at a pre-determined start (e.g., of the peak period) and deactivating the geofence at a pre-determined end (e.g., of the peak period). Activating may mean turning on a flag, and deactivating may mean turning of a flag indicative of activation state for the geofence. The flag may be comprised by a dataset comprising geo data indicative of the virtual geofence. Alternatively, or in addition, a dataset comprising geo data indicative of the geofence may comprise activation times and deactivation times, which may be compared to a current time for determining an activation state. In some embodiments, the method may further include detecting these times and processing the method steps only when the current time is within these times.

According to various embodiments, the geofenced area GEO1 may include a virtual fence that may be based on a global coordinate positioning system, such as, for example, agps, gps, mobile gps, galileo, or equivalents.

According to some embodiments, the geofenced area GEO1 may be based on physical traffic signs, and the method 100 may further include performing automated traffic sign recognition, for example, at the demand vehicle 2. According to various embodiments, determining 110 that a route of a demand vehicle 2 overlaps with the geofenced area GEO1 may include: providing 111 time of entry; providing 112 time of exit; and calculating 113 a time difference between the time or entry and the time of exit. Alternatively, a counter may be used which starts at the entry and stops at the exit. The method 100 may further include determining 120 that there is an air treatment demand requirement at a demand vehicle 2. Determining 120 may include determining 122 that net emissions of the demand vehicle 2 may be above a pre-determined limit LIM1 for the geofenced area GEO1. Determining 122 may include calculating 124 an estimated emission based on the time difference and of nominal emissions, or based on measured emission.

FIG. 10 shows a fleet of vehicles for illustration purposes. Various embodiments concern a fleet 50 of two or more vehicles 2, 1' in accordance with various embodiments. The two or more vehicles 2, 1' may be configured to operably communicable with each other. The first vehicle 2 (demand vehicle) may be configured to requesting a second vehicle 1' (supply vehicle) to provide air treatment, and the second vehicle 1' may be configured to receive the request and control an air treatment system of the second vehicle 1' to increase treatment capacity in accordance with various embodiments.

According to various embodiments, the fleet 50 may include three or more vehicles 2, 1', 1", wherein a first vehicle 2 is configured to request a plurality of vehicles 1', 1", including at least a second vehicle 1', to provide air treatment, and wherein each vehicle of the plurality of vehicles 1', 1" is configured to receiving the request and control a respective air treatment system to increase treatment capacity in accordance with various embodiments. Thus, vehicles 1' and 1" may compensate a net emission from the first vehicle 2. Other vehicles (e.g., not configured according to the present disclosure) may be part of local traffic but not part of the fleet.

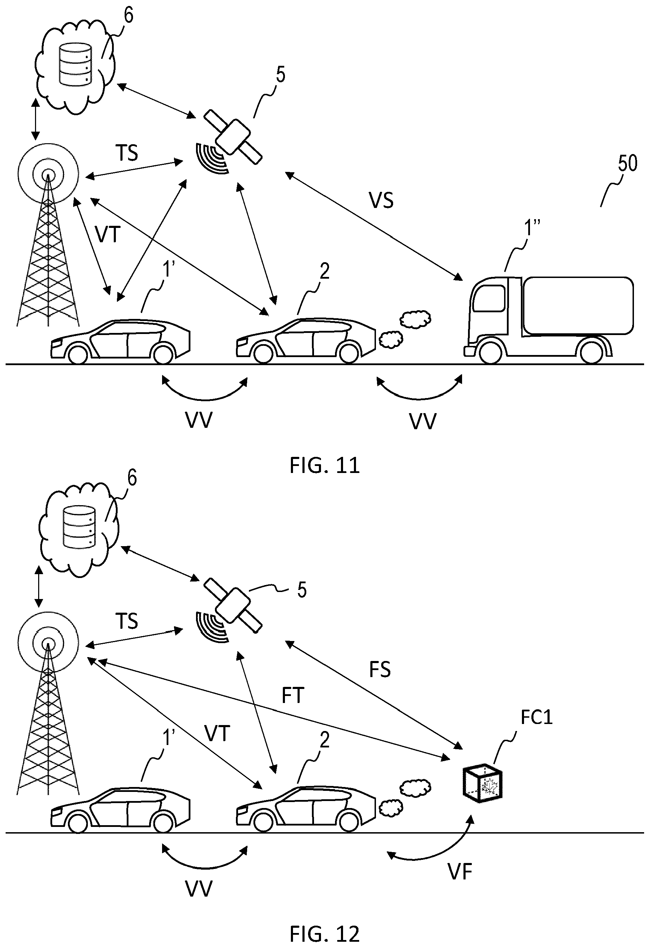

FIG. 11 shows a fleet of vehicles in accordance with various embodiments, for illustration purposes. Various embodiments concern a fleet 50 of two or more vehicles 2, 1', 1" in accordance with various embodiments. The two or more vehicles 2, 1', 1" may be configured to operably communicable with each other. In some embodiments the two or more vehicles 2, 1', 1" may communicate with each other via vehicle-to-vehicle communication W; for example directly (free of any transponder or transceiver, external to the vehicles). Alternatively or in addition, the two or more vehicles 2, 1', 1" may communicate with each other via infrastructure external to the vehicle, such as a satellite 5 (vehicle to satellite communication VS), vehicle to terrestrial infrastructure (phone network) VT, terrestrial infrastructure to satellite TS, via a transponder, via a transceiver, or a combination thereof, for example, the communication may further be via a server 6, e.g. in a cloud.

FIG. 12 shows a demand vehicle 2 and an immobile air treatment system FC1, optionally a supply vehicle 1' and/or other vehicles may be in the surroundings of the demand vehicle. The immobile air treatment system FC1 is also simply referred to below as 'filter' for simplification, but is not limited thereto, The demand vehicle 2 and the immobile air treatment system FC1, may be configured to operably communicable with each other (e.g, as a vehicle-to-filter communication). In some embodiments the demand vehicle 2 and the immobile air treatment system FC1 may communicate with each other via filter-to-terrestrial infrastructure communication FT, filter-to-satellite communication FS, vehicle-to-vehicle communication W; vehicle-to-terrestrial infrastructure communication FT, vehicle-to-satellite communication VS, terrestrial infrastructure-to-satellite communication TS, or a combination thereof. for example directly (free of any transponder or transceiver, external to the vehicles). The communication may further be via a server 6, e.g. in a cloud. Communication and processing via cloud has the advantage of providing a centralized system, making it simpler for tax calculations and/or turning on/off the geofence.

According to various embodiments, communication between two vehicles, either directly (vehicle-to-vehicle) or indirectly (e.g., via infrastructure) may be provided by one or more of may operate according to any one or more of the following radio communication technologies and/or standards including but not limited to: Global System for Mobile Communications (GSM) radio communication technology, General Packet Radio Service (GPRS) radio communication technology, Enhanced Data Rates for GSM Evolution (EDGE) radio communication technology, Third Generation Partnership Project (3GPP) radio communication technology, Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDM2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP any of Releases 9 to 17 and subsequent releases (such as Rel. 18, Rel. 19, etc.), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDM2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Public Land Mobile Telephony), MTD (Swedish abbreviation for Mobile telephony system D), Public Automated Land Mobile (Autotel/PALM), ARP (Finnish for car radio phone), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as 3GPP Generic Access Network, or GAN standard, Bluetooth(r), Bluetooth Low Energy (BLE), IEEE 802.15.4 based protocols (e.g., IPv6 over Low power Wireless Personal Area Networks (6LoWPAN), WirelessHART, MiWi, Thread, 802.11a) WiFi-direct, ANT/ANT+, ZigBee, Z-Wave, 3GPP device-to-device (D2D) or Proximity Services (ProSe), Low-Power Wide-Area-Network (LPWAN), Long Range Wide Area Network (LoRA) or LoRaWAN^{™} developed by Semtech and the LoRa Alliance, Sigfox, Wireless Gigabit Alliance (WiGig) standard, mmWave standards in general (wireless systems operating at 10-300 GHz and above such as WiGig, IEEE 802.11ad, IEEE 802.11 ay), technologies operating above 300 GHz and THz bands, (3GPP/LTE based or IEEE 802.11p and other) V2X communication technologies, 3GPP cellular V2X, DSRC (Dedicated Short Range Communications) communication systems such as Intelligent-Transport-Systems and others, the European ITS-G5 system (i.e. the European implementation of IEEE 802.11p based DSRC, including ITS-G5A, ITS-G5B, ITS-G5C). In addition to the radio communication technologies and/or standards listed above, any number of satellite uplink technologies may be used including, for example, radios compliant with standards issued by the ITU (International Telecommunication Union), or the ETSI (European Telecommunications Standards Institute), Starlink^{™} among others. The embodiments provided herein are thus understood as being applicable to various other communication technologies, both existing and not yet formulated.

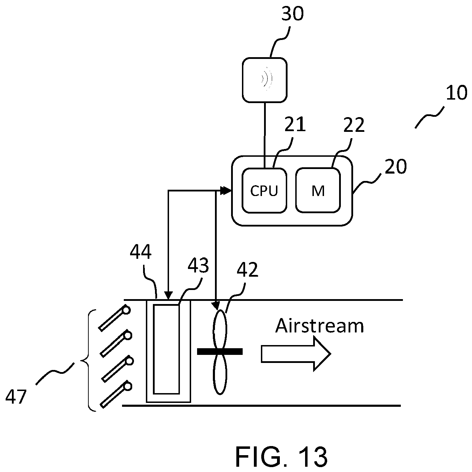

FIG. 13 shows a schematic of another embodiment of an air treatment system 10 for cleaning environmental air. The schematic is simplified for easier explanation of the disclosure. The air treatment system 10 may include a receptacle 44 configured to receive a filter 43. As can be seen, when filter 43 is installed in the receptacle 44 it is in stream a blower 42 (e.g., a fan) of a vehicle 1 in an airstream when air is flowing through the filter 43. The air treatment system 10 may include a computer memory 22 storing instructions to cause the microprocessor 21 to carry out the method in accordance with various embodiments. In examples, the computer memory 22 and the microprocessor 21 may be part of a control circuit 20, for example an ECU or of a dedicated air treatment system controlling circuit. The control circuit 20 may be operable to communicate with the a communication interface 30. Further to the shutter 47, the air treatment system 10 of FIG. 10 may include an additional shutter and/or a bypass. The air treatment system 10 may further include the filter 43. A blower may also be dispensed with, and the airflow through the filter may be generated when the vehicle 1 is in movement.

Various embodiments also relate to a system configured to carry out the method 100.

Various embodiments of the disclosure enable a vehicle to receive emissions, such as particle emission, compensation from other vehicles. Compensation may also be at a same location, another location, or another time for the same location. Compensation performed at the vicinity of the vehicle can avoid pollution peaks effectively creating a cleaner vehicle, when the neighboring cars, or cars passing right before or shortly after at the same location, of a fleet may provide the necessary air treatment.

## Claims

1. A method (100) of treating environment air comprising:
determining (110) that a route (RUT1) of a demand vehicle (2) overlaps with a geofenced area (GEO1);
determining (120) that there is an air treatment demand requirement at a demand vehicle (2);
calculating (130) an air treatment demand (DEM1), which is an amount to offset emissions (EM2) of the demand vehicle (2); and
controlling (140) an air treatment system (10) to carry out air treatment within the geofenced area (GEO1).

2. The method (100) of claim 1, wherein the air treatment system (10) is external to the demand vehicle (2).

3. The method (100) of claim 2, wherein the air treatment system (10) is an immobile air treatment system (FC1) located in the geofenced area (GEO1).

4. The method (100) of claim 2 or claim 3, wherein the air treatment system (10) is part of a supply vehicle (1').

5. The method (100) of claim 4, wherein it is determined that the supply vehicle (2) crosses the geofenced area (GEO1).

6. The method (100) of claim 5, wherein the demand vehicle (2) and the supply vehicle (1') are within the geofenced area (GEO1) during an overlap time (OVL1), or cross the geofenced area within a pre-determined time duration (TD1).

7. The method (100) of any one of claims 4 to 6, wherein the supply vehicle (1') is an e-vehicle or a hybrid vehicle.

8. The method (100) of any one of claims 4 to 7, further comprising, determining one or more of:
- time of entry of the demand vehicle (2) in the geofenced area (GEO1);
- time of exit of the demand vehicle (2) in the geofenced area (GEO1);
- time of residence of the demand vehicle (2) in the geofenced area (GEO1);
- travel distance of the demand vehicle (2) within the geofenced area (GEO1).

9. The method (100) of any one of claims 4 to 8, further comprising, determining one or more of:
- time of entry of the supply vehicle (1') in the geofenced area (GEO1);
- time of exit of the supply vehicle (1') in the geofenced area (GEO1);
- time of residence of the supply vehicle (1') in the geofenced area (GEO1);
- travel distance of the supply vehicle (1') within the geofenced area (GEO1).

10. The method (100) of any of the previous claims, further comprising determining that no sufficient capacity of air treatment is available and rerouting the demand vehicle (2) to steer away from the geofenced area (GEO1).

11. The method (100) of any of the previous claims, further comprising determining that an amount of treatment by the air treatment system (10) is lower than the air treatment demand (DEM1) and storing data indicative of the difference in memory.

12. The method (100) of any of the previous claims, further comprising activating the geofence at a pre-determined start and deactivating the geofence at a pre-determined end.

13. The method (100) of any of the previous claims, wherein the geofenced area (GEO1) comprises a virtual fence that is based on a global coordinate positioning system.

14. The method (100) of any of the previous claims, wherein the geofenced area (GEO1) is based on physical traffic signs, and the method (100) further comprises performing automated traffic sign recognition.

15. The method (100) of any of the previous claims, wherein
determining (110) that a route of a demand vehicle (2) overlaps with the geofenced area (GEO1 comprises:
providing (111) time of entry;
providing (112) time of exit;
calculating (113) a time difference between the time or entry and the time of exit;
and
determining (120) that there is an air treatment demand requirement at a demand vehicle (2) comprises
determining (122) that net emissions of the demand vehicle (2) are above a pre-determined limit (LIM1) for the geofenced area (GEO1), which comprises
calculating (124) an estimated emission based on the time difference and of nominal emissions or measured emission.

16. The method (100) of any of the previous claims, wherein
determining (110) that a route (RUT1) of a demand vehicle (2) overlaps with the geofenced area (GEO1) comprises:
providing (114) a travelled distance travelled by the vehicle within the geofenced area (GEO1) and
determining (120) that there is an air treatment demand requirement at a demand vehicle (2) comprises
determining (122) that net emissions of the demand vehicle (2) are above a pre-determined limit (LIM1) for the geofenced area (GEO1), which comprises
calculating an estimated emission based on the travelled distance and nominal emissions or measured emission by summation.

17. The method (100) of any of the previous claims, wherein
determining (110) that a route (RUT1) of a demand vehicle (2) overlaps with the geofenced area (GEO1) comprises:
determining (116) whether a position of the demand vehicle (2) is currently within the geofenced area (GEO1) and aggregate route until completed or calculate time of entry and exit.

18. The method (100) of any of the previous claims, wherein
determining (110) that a route (RUT1) of a demand vehicle (2) overlaps with the geofenced area (GEO1) comprises:
calculating (117) a route; and
determining (118) in advance a travel distance or an estimated travelling time,
wherein determining (120) that there is an air treatment demand requirement at a demand vehicle (2) comprises
determining (122) that net emissions of the demand vehicle (2) are above a pre-determined limit (LIM1) for the geofenced area (GEO1), which comprises
determining an amount of pollution associated with the demand vehicle (2) travelling through the geofenced area (GEO1), based on a pollution rate by time and the travel time, or on a pollution rate by distance and the travel distance.

19. A method (100) of any of the previous claims, wherein the air treatment system (10) comprises an air filter.

20. A system configured to carry out the method (100) of any of the previous claims.
